# EUROPEAN PATENT SPECIFICATION

(11) **EP 2 495 656 B1**
(45) Date of publication and mention of the grant of the patent: **09.10.2013**
(21) Application number: 11156696.4
(22) Date of filing: 02.03.2011
(51) Int. Cl.: G06F 9/48, G06F 9/50

(54) **Enhanced prioritising and unifying interrupt controller**
Unterbrechungssteuerung mit verbesserter Priorisierung und Vereinheitlichung
Contrôleur d'interrupteur à unification et hiérarchisation améliorées

(43) Date of publication of application: 05.09.2012
(73) Proprietor: BlackBerry Limited, Waterloo ON N2L 3W8 (CA)
(72) Inventor: Evans, Andrew Michael, Teversham, Cambridgeshire CB1 9AJ (GB); Cook, Alastair Erik Thomas, Godmanchester, Cambridgeshire PE29 2LT (GB)
(74) Representative: Finnie, Peter John

(56) References cited:
- EP-A1- 1 420 341
- EP-A2- 1 327 935
- EP-A2- 1 830 258
- US-A1- 2007 157 207

## Description

### Field of the Invention

This invention relates to an interrupt controller which unifies software requests and hardware interrupt handling.

### Background of the Invention

In a system controlled and operated by a processor chip or the like, a given processor's computational resources are finite. Accordingly, when operating on a given task it often becomes necessary, because of a request for the use of processor resources from hardware or software components within the computing environment, to interrupt the current task of the processor to run a more important task. Once the more important task is completed, the processor resumes prosecution of the task on which it was previously engaged.

In a typical system, there will ordinarily be multiple tasks which need to be supported on the same processor, and software and hardware operations competing for processor resources forward requests for resource allocation to the processor. When those resource requests come from hardware devices, they are in the form of interrupt signals whilst resource requests from software applications take the form of software requests, where the hardware interrupt or software request requests the processor to interrupt the task currently being processed and begin processing of the task which is the subject of the software request or hardware interrupt.

Software requests arising from one or more software components of the computing system are typically passed to a software implemented operating system scheduler. The operating system scheduler receives and collates software generated request signals from any one of a number of software components, programs, and applications which require tasks to be run by the processor. The operating system scheduler schedules the software requests into an order to be executed by the processor and forwards each software request to the processor in that order for execution of the task which is the subject of the software request.

In parallel to the software implemented operating system scheduler, an interrupt controller is provided as a stand alone component, outside of the control of the operating system software. The interrupt controller receives hardware generated interrupts from various hardware peripheral devices. The interrupt controller typically passes the hardware interrupts to the processor for execution via an interrupt service routine and a hardware task look up table which are both subroutines run by the software operating system. The operation of the interrupt service routine and the hardware task look up table are triggered by the reception of the hardware interrupt from the interrupt controller. As soon as the interrupt controller receives a hardware interrupt signal from a peripheral hardware device, the hardware interrupt is passed immediately to the processor via the interrupt service routine and hardware task look up table. The hardware interrupt sent to the processor interrupts the operating system scheduler and any tasks (arising from software generated requests) which it may have scheduled the processor to execute.

The competition for processor resources between the hardware generated interrupt processing system and the software generated request processing system can result in collisions between software and hardware task scheduling on the processor. Since the hardware interrupts are directed to the processor by the hardware interrupt processing system (interrupt controller, interrupt service routine, and hardware look up table) completely independently of the operation of the operating system task scheduler, and since the hardware interrupts interrupt both the scheduling of software requests generated by the operating system scheduler and any tasks corresponding to a software request currently being executed by the processor, priority is always given to hardware interrupts. This can lead to an inefficient use of processor resources, particularly where a task related to a given software request may be of a higher priority than a task related to a given hardware interrupt. Moreover, the independent operation of the operating system scheduler and the interrupt service routine both being implemented by the operating software of the computing system can lead to collisions of interrupts and requests and is often a source of programming "bugs" as each system competes for the finite processor resources available.

US2007/0157207 discloses an interrupt controller arbitrating hardware interrupts and task requests. Process IDs are stored in a first or a second queue depending on their priority and emergency.

EP1327935 discloses scheduling of interrupt requests and task activation requests with different priorities, while interrupt request generally have a higher priority than task activation requests.

Thus there is a need in the art to provide a computer system with a more efficient software request and hardware interrupt handling system and process which overcomes the problems identified above.

### Summary of the Invention

In accordance with a first aspect of the present invention, an interrupt controller for routing interrupt signals to a processor is provided, said controller comprising: at least one interface for receiving hardware-generated interrupt signals and software-generated request signals; means for determining a priority associated with each said received signal; a storage unit for storing data associated with each received signal, a storing order being based on the priority determined for each signal, and for signals of the same priority, on the chronological order of receipt of said signals; wherein said interrupt controller is operable to instruct said processor to read stored data from the interrupt controller in the stored order, wherein stored data having a higher priority is read in preference to stored data having a lower priority.

Preferably, the data associated with each received signal may comprise a task pointer having both a Task ID and also a Task Data field.

Preferably, the interrupt controller may comprise one or more further storage units for storing data associated with each and every type of hardware-generated interrupt signal that could be received by said interrupt controller, wherein said interrupt controller may be operable to obtain the data associated with a particular received hardware-generated interrupt signal from the one or more further storage units.

Preferably, the interrupt controller may comprise two of said one or more further storage units, wherein the first of said two storage units may be arranged to store task pointers associated with each and every type of hardware-generated interrupt signal that could be received by said interrupt controller, and the second of said two storage units may be arranged to store the priority levels associated with each and every type of hardware-generated interrupt signal that could be received by said interrupt controller, wherein said interrupt controller may be operable to obtain the priority associated with a particular received hardware-generated interrupt signal from the second further storage unit and the task pointer associated with that particular received hardware-generated interrupt signal from the first further storage unit.

Preferably, the interrupt controller may further comprise means for reading the data associated with each received software-generated interrupt signal from said software-generated request signal. The means for reading the data associated with each received software-generated request signal may comprise means for reading a task pointer and inferring a priority value associated with the task pointer.

Preferably, the task id may comprise data identifying a task routine to be carried out by the processor. The task data field preferably may comprise data comprising of at least one of: information instructing the processor as to which task to execute; information instructing the processor as to what hardware or software component or application to use to execute said task routine; data to be directly processed by the processor using the task routine; a pointer to data to be processed by the processor using the task routine; and/or temporal information.

Preferably, the storage unit for storing the data associated with each received signal after the priority of said signal has been determined may comprise a first-in-first-out memory structure for each priority of signal that can be received by the interrupt controller. Preferably, said storage unit for storing the data associated with each received signal after the priority of said signal has been determined may comprise a single first-in-first-out memory structure sub-divided into a plurality of individually addressable registers, where there may be a register for each priority of signal that can be received by the interrupt controller.

Preferably, the interrupt controller may further comprise: a read control block; a latched priority register; and a latched task pointer register; wherein, at any given instance, said read control block may be operable to place a priority value corresponding to a priority of a stored Task Pointer into said latched priority register, and issue a signal to said processor to cause it to read the latched priority register; and in response to the processor reading the latched priority register, copy the Task Pointer into the latched task pointer register to be read by the processor.

In accordance with a second aspect of the present invention, a method of routing interrupt signals to a processor using an interrupt controller is provided, said method may comprise: receiving hardware-generated interrupt signals and software-generated request signals; determining a priority associated with each said received signal; storing data associated with each received signal in a storage unit, a storing order being based on the priority determined for each signal, and for signals of the same priority, on the chronological order of receipt of said signals; and instructing said processor to read stored data from the interrupt controller in the stored order wherein stored data having a higher priority is read in preference to stored data having a lower priority.

Preferably, the method may further comprise storing a task pointer having both a Task ID and also a Task Data field as the data store in the storage unit, wherein said Task ID may comprise data identifying a task routine to be carried out by the processor and data in said Task Data field may comprise at least one of: information instructing the processor as to which task to execute; information instructing the processor as to what hardware or software component or application to use to execute said task routine; data to be directly processed by the processor using the task routine; and/or temporal information.

Preferably, the method may further comprise: storing in said interrupt controller task pointers corresponding to each and every hardware-generated interrupt signal that could be received by said interrupt controller, where said method may further comprise, when a hardware-generated interrupt signal is received at the interrupt controller, retrieving the data associated with the particular received hardware-generated interrupt signal from storage.

Preferably, the method may further comprise: at any given instance, using a read control block to: place a priority value corresponding to a priority of a highest priority Task Pointer into a latched priority register and instruct said processor to read said latched priority register; and in response to said processor reading said latched register, copy the Task Pointer into a latched task pointer register to be read by the processor.

### Brief Description of the Drawings

Embodiments of the invention will now be described with reference to the attached drawings, in which:
Figure 1 is a schematic diagram showing a high level overview of the enhanced interrupt controller and computer system in which it is implemented;
Figure 2 is a schematic diagram showing a simplified view of the enhanced interrupt controller of the present invention;
Figure 3 is a schematic diagram showing a more detailed view of a number of the components of the enhanced interrupt controller depicted in Figure 2;
Figure 4 is a diagram showing the ordering of interrupt and request based events and the order in which they are put into the enhanced interrupt controller of the present invention;
Figure 5 is a diagram showing the order of processing of the interrupt and request based events illustrated in Figure 4, put into the enhanced interrupt controller of the present invention; and
Figure 6 shows a more detailed schematic view of the enhanced interrupt controller of the present invention.

### Detailed Description

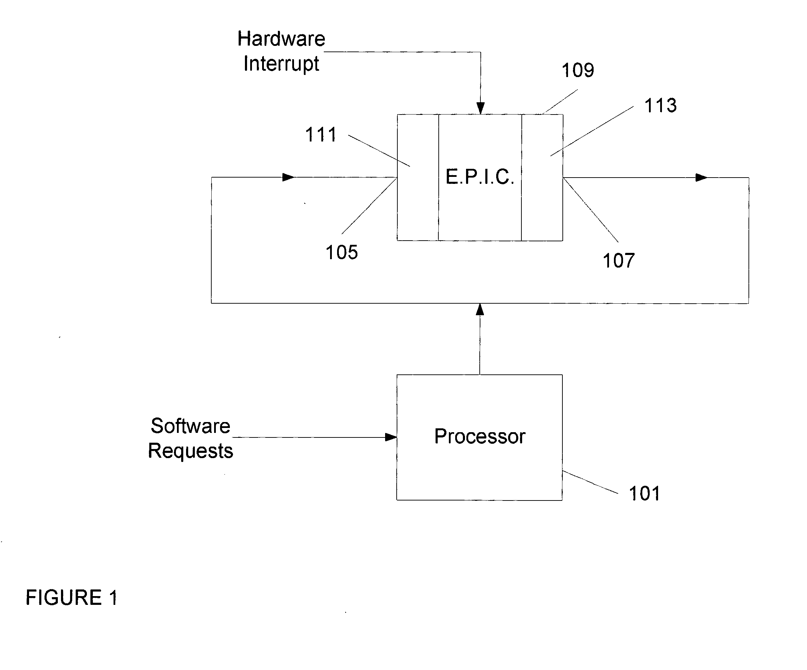

Figure 1 shows a schematic overview of the components of a computer system according to the invention which incorporates the enhanced interrupt controller of the present invention.

A microprocessor 101 is connected, via a processor data bus 103 to an input 105 and an output 107, respectively, of the enhanced interrupt controller 109 by way of respective interfaces 111, 113 within the enhanced interrupt controller 109. The interfaces 111, 113 each comprise a number of components which will be described in more detail in due course. The interfaces 111, 113 allow the input of appropriate signals to the enhanced interrupt controller and the output of signals from the enhanced interrupt controller, respectively. As in a typical computer processor, the processor 101 runs a number of software applications all of which require tasks to be carried out. When running a particular software application or process the processor 101, aware of actions/tasks required imminently by that particular application or process, generates software requests ahead of the particular task needed. In a typical computer processor environment, these software requests are passed to the operating system scheduler to be passed back to the processor 101 at the appropriate point in time for them to be processed.

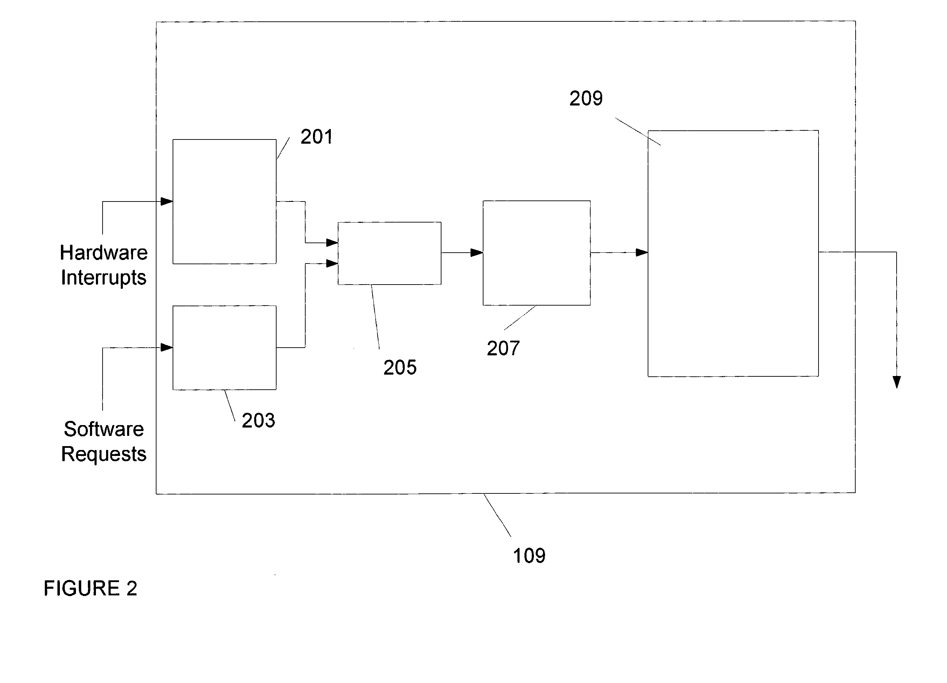

In the present invention, however, software requests generated by the processor in anticipation of imminent tasks required by the software applications which it is running, are passed from the processor 101 via the processor data bus 103, to the input 105 of the enhanced interrupt controller. Each software request generated by the processor 101 has a Task Pointer comprising a Task ID and Task Data which will be described in more detail below. Thus, in contrast to typical software request handling systems, an operating system scheduler is not implemented to receive software requests and place them into an order for input back into the processor 101. Hardware interrupt signals generated by hardware peripheral devices and software requests forwarded by the processor 101 are input directly to the enhanced interrupt controller 109 in a manner which will be described in more detail below with reference to Figure 2.

In response to these hardware interrupt signals and software requests, as will be explained in further detail below, the enhanced interrupt controller 109 prioritises all of the software and hardware tasks associated with the interrupts and requests respectively, relative to one another and then feeds those hardware and software tasks (actually their Task Pointers) in order of priority, and within each level of priority in the chronological order of occurrence of each task, to the processor 101 for action.

Turning to Figure 2, a more detailed schematic view of the enhanced interrupt controller 109 of the invention is depicted. The interface 111 described in relation to Figure 1 which allows the input of appropriate signals to the enhanced interrupt controller 109 includes a Hardware Interrupt Receiving Section 201 and a Software Request Receiving Section 203. The Hardware Interrupt Receiving Section 201 receives hardware-generated interrupt signals which are input into the enhanced interrupt controller 109 from the peripheral hardware devices. A priority decoder 205 assigns a priority and a Task Pointer to each hardware interrupt signal received, in a manner which will be described in further detail below. After assigning a priority and Task Pointer to a given hardware-generated interrupt signal received at the Hardware Interrupt Receiving Section 201, the priority decoder 205 passes the Task Pointer associated with a particular interrupt to a Message Queue module 207. The manner in which the Task Pointers are passed to the Message Queue module 207 and the nature of the Message Queue module 207 will be described in more detail below.

The Software Request Receiving Section 203 receives the software request signals input into the enhanced interrupt controller 109 from the processor 101. The Software Request Receiving Section 203 consists of a series of registers where there is a register corresponding to each level of possible software request priority within the computing system (for example, if there are five priority levels of software request then the Software Request Receiving Section would have five registers). Each software generated request signal that the processor 101 sends to the enhanced interrupt controller 109 consists of a Task Pointer (where the Task Pointer associated with each software request has the same form and contains similar Task ID and Task Data to the Task Pointers described in relation to a hardware generated interrupt signal), via the bus 103, directly into one of the registers within the Software Request Receiving Section 203. The register which is chosen by the processor to write to corresponds to the priority level of the software request which the processor has converted into a Task Pointer.

The software requests, converted into the form of Task Pointers by the processor which also knows the priority associated with that software request, are written into the appropriate registers of the Software Request Receiving Section 203 by the processor 101 and are then passed to the Message Queue module 207 by the priority decoder 205 as will be described in more detail below. The manner in which the software requests, written into the Software Request Receiving Section 203 as Task Pointers, are passed to the Message Queue module 207 by the priority decoder 205 and the nature of the Message Queue module 207 will be described in more detail below.

The enhanced interrupt controller also includes a further set of registers, or memory, that stores data about all of the types of hardware interrupt signals that may be generated by various ones of the peripheral hardware devices and input into the enhanced interrupt controller (i.e. received at the Hardware Interrupt Receiving Section 201) for task scheduling. Specifically, for each type of hardware interrupt signal that could be generated by the computer system in which the enhanced interrupt controller 109 operates, the enhanced interrupt controller 109 will store a priority value associated with that particular hardware interrupt signal and also a Task Pointer. The priority value is simply a numerical value corresponding to the priority (i.e. the importance) of that particular interrupt signal originating from that particular piece of hardware.

For Task Pointers associated with both hardware interrupts and also software requests, the Task Pointer, as described above, comprises descriptive information (meta data) in the form of a Task ID and Task Data. The Task ID identifies which task must be invoked by the processor 101 for the particular hardware interrupt signal or software request with which the Task ID is associated. The Task Data field of the Task Pointer can contain data such as a memory address where data relevant to the task to be carried out by the processor 101 is stored. Preferably, however, the Task Data field actually contains meta data (i.e. data/information above and beyond a simple memory address of where data relevant to the task associated with the Task Pointer is stored) sufficient to allow the processor 101 to determine not only which task to execute but also with what entity (for example a software entity or hardware entity). Thus the Task Pointer is not simply an instruction address, but contains greater information for the processor to more finely control task execution. In another preferred embodiment, the meta-data could be the actual data upon which the processor is required to operate.

Thus the skilled person will appreciate that the enhanced interrupt controller 109 holds within it a store or memory with all of the details of all of the tasks which must be performed by the processor in response to various ones of the hardware generated interrupt signals which might be received at the Hardware Interrupt Receiving Section 201. This data (i.e. Task Pointers and associated priority values) is written into and stored within the enhanced interrupt controller 109 during initialisation of the system by the processor 109.

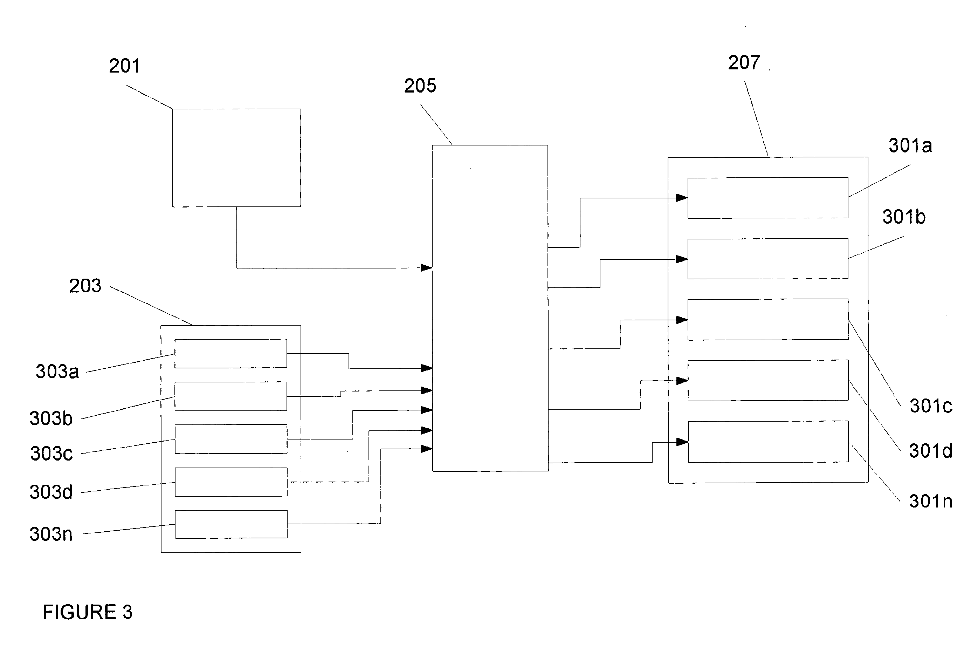

The Hardware Interrupt Receiving Section 201, Software Receiving Section 203, priority decoder 205, and Message Queue module 207 are depicted in further detail in Figure 3. The Message Queue module 205 comprises a number of individual "first-in-first-out (FIFO)" type memory structures 301 a...301 n, which effectively form a series of individual queues for data input to the Message Queue module 207. There is one FIFO queue 301a...301n for each level of priority defined in the system. The number of registers 303a...303n in the Software Request Receiving Section 203 mirrors the number of FIFO queues 301a...301n in the Message Queue module 207 and each register 301 a...301 n in the Message Queue module 207 corresponds to a particular one of the FIFO queues 303a...303n in the Software Request Receiving Section 203. The priority decoder 205, as will be explained in more detail below, passes Task Pointers stored in the registers 303a...303n into the FIFO queue 301a...301n which corresponds to it (i.e. has the same priority level associated with it).

The FIFO queues 301a...301n of the Message Queue module 205 are used to store Task Pointers associated with both hardware interrupts (received by the Hardware Interrupt Receiving Section 201) and software requests (received by the Software Request Receiving Section 203). In the case of hardware generated interrupts, the priority decoder 205 looks up the priority value and the Task Pointer for each hardware interrupt signal received by the Hardware Interrupt Receiving Section 201. The priority decoder 205 uses the priority value for a given hardware interrupt generated Task Pointer to place the Task Pointer data for that particular interrupt into the correct FIFO queue 301a...301n in the Message Queue module 205 which is associated with that particular priority level.

In the case of software request signals which have been written to the Software Request Receiving Section 203 by the processor in the form of Task Pointers, Task Pointers corresponding to each of those software requests will have been written to the registers 303a...303n within the Software Request Receiving Section 203 according to the appropriate priority. Since each register 303a...303n in the Software Request Receiving Section 203 corresponds to a particular one of the FIFO queues 301a...301n in the Message Queue 207, the priority decoder 205 is able to route the Task Pointer data within each register 303a...303n into the appropriate FIFO queue 301a...301n. The skilled person will thus appreciate that the Task Pointers relating to either hardware interrupts or software requests are input into the FIFO queues in the Message Queue module 207 in dependence on their priorities. Because the queues 301 a...301 n are implemented in FIFO structures, the order of the Task Pointers within each queue are maintained in chronological order of their being placed in the FIFO queue.

Referring again to Figure 2, the enhanced interrupt controller 109 also includes an output section 209 which is connected to the Message Queue module 207 and reads out data relating to the Task Pointers from the FIFO queues 301a...301therein to further registers within the output section 209 that the processor 101 is then instructed to read. The output section 209 can be considered to be the interface 113 shown in Figure 1. The Task Pointers from the FIFO queues 301a...301n in the Message Queue module 207 are read out by the output section 209 in a strict order as will be described in more detail below. Any Task Pointers in the highest priority level FIFO queue 301a...301n n are read first, and only if there are no Task Pointer entries at the output of the highest priority FIFO queue 301a...301n does the output section 209 read the output of the FIFO queue 301a...301n having the next lowest priority and so on until a Task Pointer is detected in one of the queues.

Since the reading of the FIFO queues 301a...301n is conducted in this hierarchical manner from highest priority FIFO queue towards the lowest priority FIFO queue, the skilled person will understand that the Task Pointer read from the FIFO queues is a Task Pointer residing in the highest priority level FIFO queue currently having an entry (i.e. the Task Pointer read from the Message Queue 207 has the highest priority value at any given time). The output section 209 copies the priority of the Task Pointer which it is currently reading into one of the further registers (which will be described in more detail below) and sends a signal to the processor 101 which causes the processor to read the register where that priority value has just been stored. In response to that, the output section 209 copies the Task Pointer whose priority it just copied into a further register which the processor then reads to obtain the Task Pointer. The processor 101 then executes the task associated with the Task Pointer it has read from the register. Whilst the Task Pointer is being processed by the processor, its entry in the FIFO queue 301a...301n remains.

Once the processor 101 has read the priority value of the highest priority Task Pointer, the priority value is also added to the top of a priority mask stack within a Priority Mask module in the output section 209. The Priority Mask Stack is a "last-in-first-out" type memory structure. The priority value at the top of the Priority Mask Stack is used by the Priority Mask module to provide a "mask" of the FIFO queues 301a...301n having priority values lower than the priority value at the top of the Priority Mask Stack. "Masking" is a well understood technique in the field of computer architecture. The skilled person would understand that "masking" simply controls what values can be read from memory structures in computer architecture and will not be described in further detail here.

A simplified description of the enhanced interrupt controller will now be described to assist in the understanding of the invention.

After the system is initialised, the enhanced interrupt controller checks the current Priority Mask value (which is held in the Priority Mask Stack) and then continually monitors all of the FIFO queues 301a...301n in the Message Queue 207 for Task Pointers (although only those Task Pointers in FIFO queues of higher priority than the current Priority Mask value can be read by the output section 209), from highest priority to lowest priority, until a Task Pointer is found in one of those FIFO queues. At system initialisation, no priority value is stored in the Priority Mask Stack, thus the Priority Mask is set at the lowest priority meaning that a Task Pointer could potentially be discovered in, and then read from, any of the FIFO queues 301a...301n.

Once a Task Pointer is found in a FIFO queue 301 a...301 n, the output section 209 of the enhanced interrupt controller 109 ascertains the priority level of the Task Pointer (derivable from the FIFO queue in which is was discovered) and checks this against the priority mask level to see if that Task Pointer's priority is higher than the priority mask level (i.e. carries out the "masking" operation discussed above). If so, the output section 209 reads the priority of the Task Pointer into one of the additional registers within the output section 209 (as will be described in more detail in due course) and also sends a signal to the processor 101 which instructs the processor to read that register.

Once the processor 101 reads the priority value of the Task Pointer, the priority value of the Task Pointer is added to the top of the Priority Mask Stack and this becomes the priority level which the Priority Mask module sets its priority mask level equal to. All FIFO queues of a priority equal to and below that level are "masked".

The Task Pointer is then copied from the FIFO Queue to a register within the output section 209 and the processor reads that register to obtain the Task Pointer. Once the task associated with the Task Pointer that is being processed by the processor (i.e. the Task Pointer which set the priority mask level) is completed by the processor 101, the processor writes back to the enhanced interrupt controller 205 the priority value of the Task Pointer which it has just completed. The enhanced interrupt controller 109 removes that priority value from the top of the Priority Mask Stack and also removes the Task Pointer from the FIFO queue 301a...301n in which it resides within the Message Queue 207.

In removing the priority value from the top of the Priority Mask Stack, the next most recently stored priority value in the Priority Mask Stack which has not yet been removed from the stack (by the processor completing the task associated with its Task Pointer and writing the priority value back) sets the level of the "masking" carried out by the Priority Mask module. This means that the output section 209 will only be able to read out a Task Pointer in the FIFO queues 301a...301n in the Message Queue 207 having a priority higher than the new priority level mask set by the new priority value uncovered at the top of the priority mask stack which has been "exposed" by the removal of the priority value corresponding to the Task Pointer which the processor 101 has just written back to the priority mask stack.

For example, if a task at priority 5 is currently being executing by the processor, the priority mask will allow interrupts from FIFO queues having a priority higher than priority level 5 to further interrupt the processor. If, for example, a Task Pointer arrives in queue priority 2 (which is higher than priority level 5), the CPU will be interrupted and will be asked to action this priority 2 task. When the priority 2 Task Pointer is actioned, the priority mask stack would then hold two values: 2 and 5 with 2 being uppermost since it was the most recent priority level actioned. Only FIFO queues having a priority above priority level 2 could further interrupt the processor since the top of the mask stack has the value priority 2 (FIFO Queues having priority levels equal to and less than this priority value are masked out). Upon completion of Task at priority 2, the processor writes back the value 2 to the enhanced interrupt controller and the value is removed from the top of the priority mask stack which reverts the priority mask level to priority value 5 since this is the value at the top of the priority mask stack. Now interrupts from FIFO Queues having a priority higher than that value can interrupt the processor.

Upon initialisation of the system, the first Task Pointer read from the Message Queue module 207 by the output section 209 will be the highest priority Task Pointer available at that time (because, as described above, the output section 209 reads the outputs from the FIFO queues 301 a...301 n in order of their priority level and only moves to read a lower priority level FIFO queue when there are no entries in a FIFO queue of a higher priority level). It is possible, however, that once the output section 209 has copied a Task Pointer (which, at the time, would have been the highest priority Task Pointer in the FIFO queues 301 a...301 n) to the register within the output section 209 and instructed the processor 101 to read the Task Pointer from that register, a Task Pointer may reach the output of a higher priority level FIFO queue 301a...301n (i.e. there would now be a higher priority Task Pointer available to be read and executed than the Task Pointer which has just been read by the processor from the output section 209).

In this situation, the output section 209 finds the Task Pointer having the higher priority (because it is in a higher priority FIFO queue 301a...301n) because it has a higher priority than the currently set priority mask level (set by the lower priority Task Pointer currently being executed) and thus is not "masked".

Thus the output section 209 copies the priority of the higher priority Task Pointer from the Message Queue module 207 to the register in the output section 209 and then instructs the processor to read said register. Once the processor 101 receives the signal to read the register within the output section 209 into which the new priority value has been placed, it does so and this triggers the output section 209 to copy the higher priority Task Pointer to the register within the output section thus over-writing the Task Pointer of the lower priority Task which had previously been copied there. The processor then reads that register and begins executing the Task associated with the higher priority Task Pointer in place of the lower priority Task Pointer which it was, up until that point, executing. At the same time as the output section 209 copies the higher priority Task Pointer into the register in the output section 209, it updates the Priority Mask Stack so that the priority value of the higher priority Task Pointer is the top most value in the stack. This masks the output section 209 from seeing any Task Pointers at the output of the Message Queue module 207 having a priority equal to or lower than the Task Pointer currently being executed (which would now be the higher priority Task Pointer described above). Only a Task Pointer having a higher priority could replace the current Task Pointer being executed.

As described, once the higher priority task has been executed, the processor 101 writes the priority of the executed Task Pointer back to the output section 209 of the enhanced interrupt controller 109 which will then remove the priority level corresponding to that Task Pointer from the Priority Mask Stack and also remove the Task Pointer itself from the FIFO queue 301a...301n within the Message Queue module 207 in which it resided. The priority mask level will revert to the next most recent priority value held at the top of the priority mask stack which is "uncovered" by the removal of the priority value corresponding to the task which the processor has just completed. Assuming that no Task Pointers are present in higher priority FIFO queues 301a...301n than the task which was originally interrupted by the higher priority Task Pointer, that task will be returned to by the processor 101 until it too is completed.

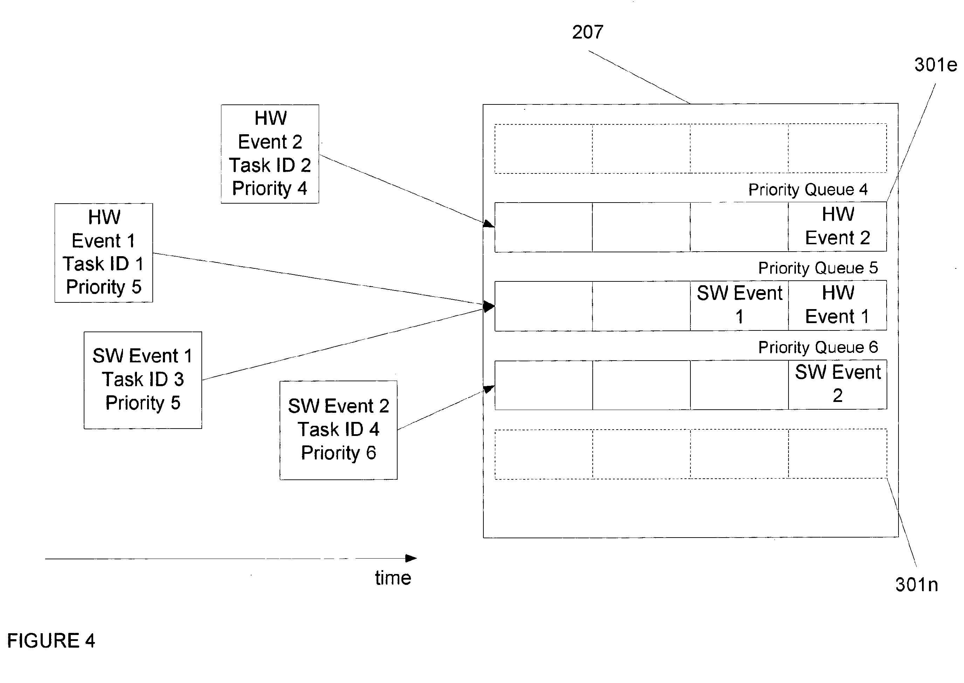

The timeline illustrated in Figure 4 demonstrates the process flow carried out by the enhanced interrupt controller 109 in response to receiving both hardware interrupts and software requests at different times and of differing priorities.

Chronologically, a hardware event, Event 1, occurs first. Event 1 corresponds to a hardware generated interrupt signal generated by a peripheral device. Since Event 1 is a hardware generated interrupt signal, the associated priority and Task Pointer data for Event 1 are looked up by the enhanced interrupt controller (from the internal registers which have been pre-loaded with all of the Task Pointers and their associated priorities for any hardware event which could occur in the computer system) and the Task Pointer for Event 1 is stored in the FIFO queue 301 a...301 n in the Message Queue module 207 of the appropriate priority level by the action of the priority decoder 205. In this case, Event 1 is determined to be at a Priority 5 level and the Task Pointer is thus stored in the FIFO queue corresponding to Priority level 5 (note that in this embodiment priority levels run from level 0 as the highest priority to level 6 as the lowest priority).

The next event is Event 2 which corresponds to a software request. This software request, since it comes from the processor 101, is already in the form of a Task Pointer and the processor is aware of what priority the Task Pointer should have. In this case the priority of the Task Pointer is determined to be priority level 5 also. The processor 101 sends the Task Pointer corresponding to the software request event 2 directly into the appropriate register 303a...303n in the Software Request Receiving Section 203, corresponding to priority level 5. From the register in the Software Request Receiving Section 203, the priority decoder 205 acts to read the Task Pointer into the FIFO queue 301a...301n n corresponding to priority level 5 within the Message Queue module 207. Because Event 2 occurred after Event 1, it is behind Event 1 in the FIFO queue 301a...301n corresponding to priority level 5. There then follows a further hardware event, Event 3, having a priority level of 4 (and thus written into the FIFO queue 301a...301n in the Message Queue module 207 corresponding to priority level 4) and then a further software event/request, Event 4, having a priority level of 6 (and thus written into the FI FO queue 301a...301n in the Message Queue module 207 corresponding to priority level 6). In order of importance with respect to their priority levels, clearly Event 3 is of higher importance than Events 1, 2, and 4, while Events 1 and 2 are of higher importance than Event 4 but of less importance than Event 3.

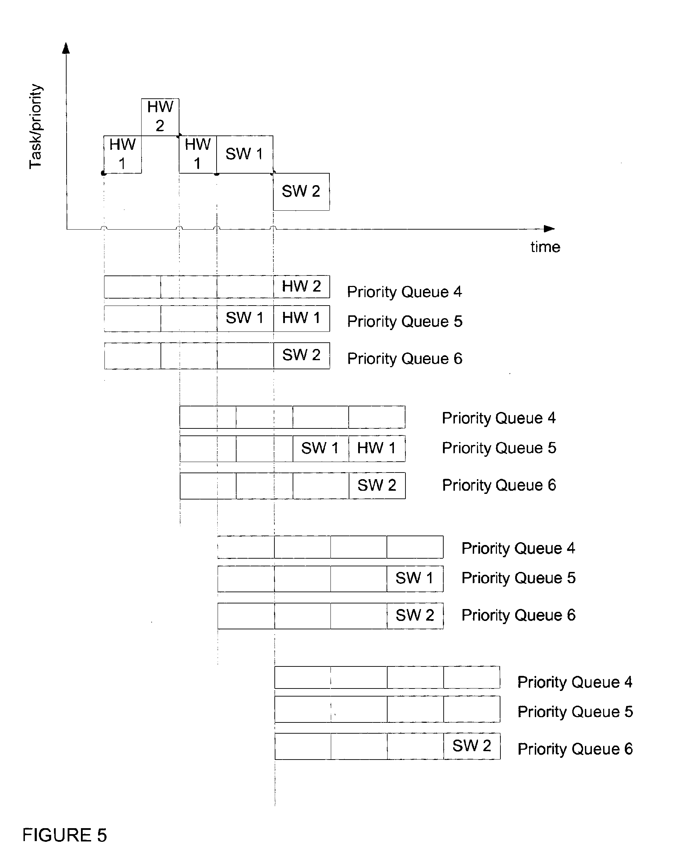

The timeline illustrated in Figure 5 shows the order of execution of the tasks corresponding to the hardware interrupts (Events 1 and 3) and software requests (Events 2 and 4) received by the enhanced interrupt controller 109 described in relation to Figure 4. Since Event 1 occurs first (and assuming that higher priority Event 3 has not actually occurred before the processor 101 is instructed to read the priority value associated with Event 1 from the output section 209) it is the first Task Pointer which the output section 209 discovers in the FIFO queues 301a...301n of the Message Queue module 207. Assuming that the priority mask level is below the priority level of level 5 (which it would be in this example since Event 1 is the first event in the system), the output section 209 copies the priority value of the Task Pointer of Event 1 to the register within it and instructs the processor 101 to read that register. When the processor reads the priority value from the register, the output section 209 copies the Task Pointer of Event 1 into a further register and, at the same time, adds the priority value of Event 1 to the top of the Priority Mask Stack so that the priority mask level is raised to level 5 (and thus masks any Task Pointers in FIFO Queues having a priority equal to or lower than priority level 5). The output section 209 is frozen until the processor reads the Task Pointer of Event 1 from the register. Once it has obtained the Task Pointer of Event 1, the processor begins execution of the task associated therewith.

Event 1 continues to be processed (note that Event 1 is processed before Event 2 because it was received before Event 2) until the higher priority Task Pointer of Event 3 is detected at the output of the Message Queue module 207 (because, being higher priority than Event 1, the FIFO Queue in which the Task Pointer of Event 3 is placed is not "masked" by the priority mask module). Since the priority level of FIFO queue 301a...301n to which Event 3 is added is empty when Event 3 occurs, the Task Pointer of Event 3 will be presented at the output of that FI FO queue 301a...301n almost immediately that Event 3 is input to the enhanced interrupt controller. Since the priority level of Event 3 (i.e. priority level 4) is higher than the priority mask level according to the value at the top of the Priority Mask Stack (i.e. level 5), the priority value of the Task Pointer of Event 3 is copied to the register in the output section 209 and the processor 101 is instructed to read said register.

This action causes the interruption of the processor's processing of the Task Pointer of Event 1. When the processor 101 reads the priority value stored in the register in the output section 209, the output section updates the Priority Mask Stack with the priority value of Event 3 as its top most value (thus the priority mask level becomes level 4), the Task Pointer of Event 3 is copied to the further register in the output section and then the output section is frozen. The processor 101 obtains the Task Pointer of the higher priority Event 3 by reading the register into which it was copied and begins executing the task associated with the Task Pointer in place of that of Event 1. When the processor reads the Task Pointer of Event 3 from the register in the output section, the output section 209 is unfrozen. The Task Pointer associated with Event 1 remains at the front of the FIFO queue in the Message Queue module 207 in which it resides.

Since no events having a priority level higher than the priority mask level are presented whilst the Task Pointer of Event 3 is being processed by the processor 101, the task associated with Event 3 is processed to completion. Upon completion, the processor 101 writes back to the enhanced interrupt controller the priority level of the executed task, i.e. 4, and the output section 209 removes that priority value from the top of the Priority Mask Stack. Thus the priority mask value reverts to the next most recently stored priority value in the priority mask stack which is "uncovered" by the removal of the priority value corresponding to the recently completed task. Thus, in this case, the priority mask stack level reverts to priority level 5. At the same time, the Task Pointer relating to Event 3 is removed from the FIFO queue 301a...301n in which it resided.

Because the task associated with the Task Pointer of Event 1 had not finished processing before the processor was interrupted by the instruction from the enhanced interrupt controller to read the register in the output section 209 which had been updated with the priority of higher priority Event 3, the task relating to Event 1 is re-entered as a result of the normal software stack operation (i.e.when the processor is interrupted in a task, it stores the details of that task until it can return to it, which it will do provided that no higher priority Task Pointers are received than the priority of the task which it was carrying out when it was interrupted).

Because there is no higher priority Event in the FIFO queues 301a...301n whilst the task associated with Event 1 is being completed (because the priority mask level is set at level 5 thus masking the Task Pointer of Event 2), the processor resumes the task it was carrying out before it was interrupted so Event 1 proceeds to completion. Once the task associated with Event 1 is completed, the processor 101 writes back to the enhanced interrupt controller 109 the priority level of the task completed (i.e. level 5) and this priority value is removed from the top of the Priority Mask Stack. Thus the priority mask value drops to the next most recently stored priority value at the top of the priority mask stack (in this case, since the priorities of only 2 events, Event 1 and 2, have been written to the priority mask stack and they have now both been removed upon completion of their tasks, the stack is empty and thus all priority levels of FIFO Queues 301a...301n are uncovered). At the same time, the Task Pointer relating to Event 1 is removed from the FIFO queue 301a...301n in which it resided.

The next highest priority Task Pointer in the Message Queue module 207 is Event 2 which, although being of the same priority level as Event 1 is processed after Event 1 because it was received in the FIFO queue 301a...301n for priority level 5 chronologically later than Event 1 and so will only begin to be processed once Event 1 has finally finished being processed. Because Event 2 is higher priority than Event 4 which also still remains to be processed, it is selected for processing first even though the FIFO Queues 301a...301n in which the Task Pointers of both Event 2 and 4 reside have both been unmasked at the end of the processing of Event 1. Accordingly, the priority value of the Task Pointer for Event 2 is copied to the register in the output section 209 and a signal sent to the processor to instruct it to read that priority from the register in the output section 209. The priority mask level is set at level 5 (so masking any further Task Pointers in FIFO Queues 301a...301n having priorities equal to or lower than that value - i.e. Event 4) and the operation then proceeds as described above. Since no higher priority events occur whilst Event 2 is being processed, it is processed to completion.

In a similar manner, once the processor 101 has finished processing the Task Pointer and task associated with Event 2 and the priority mask level has subsequently been lowered, the enhanced interrupt controller 109 instructs the processor to read the priority value of the Task Pointer associated with Event 4 (which is the lowest priority event) from the register in the output section 209 and as a result of doing so the Task Pointer of Event 4 is copied to the further register in the output section 209 from whence the processor reads it and actions it accordingly.

Thus the skilled person will appreciate that both hardware generated interrupts and software requests are all scheduled to the processor 101 by the enhanced interrupt controller 109 of the present invention in an order which depends on their priority with respect to each other and also their chronological time of input into the enhanced interrupt controller 109.

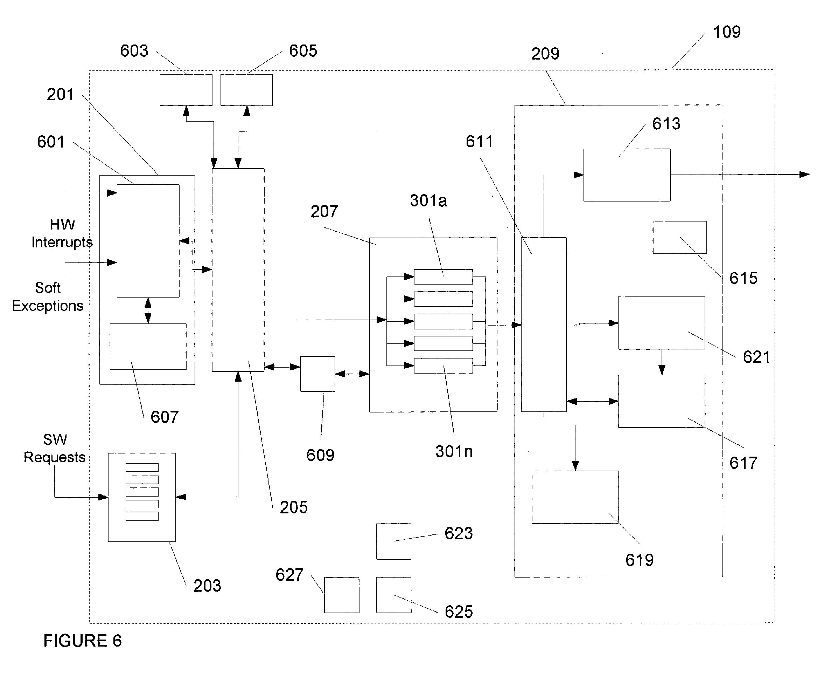

Figure 6 shows a more detailed view of the components of the enhanced interrupt controller 109 of the present invention. The same reference numerals for features already described in relation to Figures 1, 2, and 3 will be used in Figure 6 for consistency.

As shown in Figure 6, the priority decoder 205 is connected to each of a Hardware Interrupt Detection module 601, a Programmable Hardware Priority module 603, and a Pre-Programmed Hardware Task Pointer Store 605. A Hardware Interrupt Mask module 607 is connected to the Hardware Interrupt Detection module 601. The Hardware Interrupt Detection module 601 and the Hardware Interrupt Mask 607 form the Hardware Interrupt Receiving Section 201 referred to in relation to Figure 2. In addition, the Programmable Hardware Priority module 603, and the Pre-Programmed Hardware Task Pointer Store 605 are the registers within the enhanced interrupt controller 109 which store the Task Pointers and associated priority values corresponding to every type of hardware interrupt signal that can be generated in the computer system as described in relation to Figure 2. The Programmable Hardware Priority module 603 and the Pre-Programmed Hardware Task Pointer Store 605 are pre-loaded with the necessary Task Pointers and priority values upon initialization of the computer system in which the enhanced interrupt controller 109 operates.

Hardware generated interrupt signals are received at the Hardware Interrupt Detection module 601. The Hardware Interrupt Mask module 607 which is connected to the Hardware Interrupt Detection module 601 contains a number of registers which are pre-programmed at the time of system initialisation. The Hardware Interrupt Mask module 607 sensitises the Hardware Interrupt Detection module 601 to the interrupt signals received from the hardware peripherals. The skilled person will understand the operation of "masking" as used in a computer architecture environment and no further description will be provided herein. The skilled person will understand that the Hardware Interrupt Mask module 607 ensures that the Hardware Interrupt Detection module 601 only detects a single hardware interrupt event per mask enabled event in its registers. Each hardware generated interrupt signal input to the Hardware Interrupt Detection module 601 is presented in the form of an active-high signal and is edge detected by the Hardware Interrupt Detection module 601.

In this way, once a hardware generated interrupt signal from a particular source is detected by the Hardware Interrupt Detection module 601, that interrupt signal will remain asserted until the Task Pointer associated with the hardware interrupt signal has been loaded into the Message Queue module 207 by the priority decoder 205. This ensures that a peripheral hardware device cannot raise another interrupt signal (and the priority decoder cannot associate another Task Pointer and priority value with the received interrupt signal) before the current one has been accepted into the Message Queue module 207. This negates the requirement for an input queue for each hardware source of interrupt signals.

As previously described, the Programmable Hardware Priority module 603 stores a priority value for each type of hardware generated interrupt signal which might be received at the Hardware Interrupt Detection module 601. Similarly, the Pre-Programmed Hardware Task Pointer Store 605 is used to hold pre-programmed Task Pointer data associated with each type of hardware generated interrupt signal that can be received. The Task Pointer Store 605 is implemented as a series of registers or as a small random access memory structure. The skilled person will appreciate that the access mechanism to retrieve data stored in the Task Pointer Store 605 is dependent upon the form of the Task Pointer Store 605.

The priority decoder 205 is primarily used to determine the correct order to load Task Pointer data for hardware generated interrupt signals received at the Hardware Interrupt Detection module 601 (i.e. the Hardware Interrupt Receiving Section 201 referred to in relation to Figure 2) into the Message Queue module 207. It also provides the mechanism to move Task Pointer data from the Software Request Receiving Section 203 into the Message Queue module 207 as will be described in further detail in due course.

The priority decoder 205 ascertains the priority value of any hardware-generated interrupt signals received at the Hardware Interrupt Detection module 601 by querying the Programmable Hardware Priority module 603 for the appropriate priority corresponding to that type of interrupt signal.

The Software Request Receiving Section 203 described in relation to Figure 2 has been described as containing a number of registers 303a...303n. These registers are implemented as a plurality of individual first-in-first-out (FIFO) type memory structures with a memory-mapped processor interface. The FIFO structures are accessible via individual register addresses (thus forming the registers 303a...303n described in relation to Figures 2 and 3) where, as previously described, a specific register in the Software Request Receiving Section 203 is mapped to a specific one of, and thus priority level of, the FIFO queues 301a...301n in the Message Queue module 207. In a preferred embodiment, the FIFO registers 303a...303n are addressed using a two-part address format consisting of an Upper Address value which corresponds to the priority value of that FIFO queue and a Lower Address value. The skilled person will understand the general nature in which FIFO queues/memory structures are addressed and that within each FIFO queue there are a number of data slots defined for the storage of data within that particular queue. Each of those data slots has a discreet identifier or address. Thus in addressing data to the Software Request Receiving Section 203, the processor 101 writes the Task Pointers corresponding to software requests using the inherent priority of each Task Pointer as the Upper Address value in the address. The Lower address value is whichever segment of the FIFO queue addressed by the Upper Address value that is chosen to be written to.

The priority decoder 205 implements an algorithm which chooses, at any given instance, the detected hardware interrupt (detected by the Hardware Interrupt Detection module 601) having the highest priority (determined by querying the Programmable Hardware Priority module 603) of all the currently received hardware interrupts, and the Task Pointer stored within the Software Receiving Section 203 currently having the highest priority. The sources of hardware interrupt signals all have a parameter associated with them (which is also stored in the Pre-Programmed Hardware Task Pointer Store 605) to identify the hardware interrupt source (in the preferred embodiment this is a simple numbering scheme such as 1 for interrupts generated by the keyboard, 2 for interrupts generated by the graphics card et cetera). If more than one hardware generated interrupt signal detected by the Hardware Interrupt Detection module 601 has the same priority level (as determined by the priority decoder 205 querying the Programmable Hardware Priority module 603) then the highest numbered interrupt is chosen first by the priority decoder 205 to have its Task Pointer written into the Message Queue module 207. The skilled person will understand that any other method of deciding which of two equal priority hardware interrupt signals to chose for prosecution first could be employed. Furthermore, if the priority decoder 205 detects a Task Pointer corresponding to a software request and a hardware generated interrupt at the same time where their Task Pointers have the same priority level, the Task Pointer associated with the software request is chosen by the priority decoder 205 to be written to the Message Queue module 207 first before the Task Pointer associated with the hardware generated interrupt.

If a Task Pointer associated with a software request is chosen by the priority decoder 205 to be written to the Message Queue module 207 (because that Task Pointer is currently the highest priority event that the priority decoder 205 is aware of) then the Task Pointer associated with that request, which is stored in a respective register 303a...303n of the Software Request Receiving Section 203, is routed to the appropriate FIFO queue 301a...301n in the Message Queue module 207. This is carried out by the priority decoder 205 instructing a FIFO Queue Write Control block 609 that the Task Pointer in the appropriate FIFO register 303a...303n of the Software Request Receiving Section 203 is available for writing to one of the FIFO queues 301a...301n in the Message Queue module 207.

The FIFO queues 301a...301n within the Message Queue module 207 are actually realised as multiple virtual FIFOs stored within a single block of random access memory (RAM). Thus the Message Queue module 207 is addressed in a specific manner wherein each FIFO queue therein has an Upper Address value which corresponds to the priority value of that FIFO queue. The skilled person will understand the general nature in which FIFO queues/memory structures are addressed and that within each FIFO queue there are a number of data slots defined for the storage of data within that particular queue. Each of those data slots has a discreet identifier or address. Thus in addressing data to the Message Queue module 207, the priority decoder 205 supplies the FIFO Queue Write Control block 609 with a two-part address to specify where, exactly in the Message Queue module 207 the Task Pointer is to be written, the first part of the address (upper address value) being the priority level of the FIFO queue 301 a...301 n to be written to and the second part of the address (lower address value) being the specific slot within the particular FIFO queue 301a...301n to write the data to.

Since the Upper Address value corresponds to the priority level of the FIFO Queue 301a...301n to be written to, the priority decoder 205 actually supplies the FIFO Queue Write Control block 609 with the actual priority level that is associated with the particular Task Pointer to be written as the Upper Address value. The lower address value is the next free data slot within the particular FIFO Queue 301a...301n whose priority level is selected in the Upper Address value.

If a Task Pointer associated with a hardware generated interrupt is chosen by the priority decoder 205 to be written to the Message Queue module 207 (because that Task Pointer is currently the highest priority event that the priority decoder is aware of) then the priority decoder 205 instructs the FIFO Write Control Block 609 to copy the actual Task Pointer relating to the hardware interrupt (which the priority decoder 205 ascertains by querying the Pre-Programmed Hardware Task Pointer Store) to the appropriate priority FIFO queue within the Message Queue module 207 (the priority decoder 205 having ascertained the priority value associated with the Task Pointer by querying the Programmable Hardware Priority module 603). Addressing the Task Pointers to the Message Queue module 207 is done in the same way as discussed in relation to the forwarding of Task Pointers associated with software requests. That is, the priority value of the Task Pointer provides the Upper Address bits of the FIFO Queue to be written to and a lower address value provides the exact data slot within the selected FIFO queue 301a...301n to write the data to. The next available free data slot within the FIFO queue 301a...301n is always chosen.

The output section 209 referred to in relation to Figure 2 includes a FIFO Queue Read Control block 611 which is in communication with the FIFO queues 301a...301n and also with the FIFO Queue Write Control block 609. The person skilled in the art of memory structure addressing will understand that read pointers are maintained by the FIFO Queue Read Control block 611 in a similar manner to write pointers maintained by the FIFO Queue Write Control block 609 (where the read and write pointers specify which data slot(s) within each FIFO queue 301a...301n currently hold data). The priority of the FIFO queue 301a...301n to be accessed by the FIFO Queue Read Control block 611 provides the Upper Address bits while the pointer arithmetic (i.e. the particular data slot within the particular FIFO Queue specified by the Upper Address bits) determines the lower bits of any addressing required to access the FIFO Queues 301a...301n.

The FIFO Queue Read Control block 611 compares the write and read pointers for each FIFO queue 301a...301n (the write pointers for each FIFO queue being obtained by querying the FIFO Queue Write Control block 609) to determine whether there are any entries in each FIFO queue 301a...301n. A positive comparison is made when it is determined that a write pointer for a given FIFO queue 301 a...301n is greater than the read pointer for that queue thus meaning that there is at least one entry in that FIFO queue which has not yet been read by the FIFO Queue Read Control block 611. The logical OR of all positive comparisons for FIFO queues 301a...301n corresponding to priorities greater than the current Priority Mask level is used to generate a CPU interrupt (which will be described in further detail below), provided that the output of a CPU interrupt command is not masked by a CPU Interrupt Enable module 613 which is connected to the FIFO Queue Read Control block 611. The number of entries in each FIFO queue 301a...301n is determined by the comparison between the read and write pointers for each FIFO queue, and this data is stored in a Register 615 which is accessible by the processor 101.

The CPU interrupt signal is a signal which is sent from the output section 209 (specifically from the FIFO Queue Read Control block 611 when it detects a Task Pointer in one of the FIFO Queues 301a...301n that has not yet been read) to the processor 101 and takes a standard form whether the original interrupt or request came from hardware or software, respectively. That is, the enhanced interrupt controller only outputs a single CPU interrupt signal to the processor regardless of what sort of hardware interrupt or software request triggered it.

Each time that the FIFO Queue Read Control block 611 detects that there is an unread Task Pointer in the Message Queue module 207 (and because of the action of the priority mask and the order in which the FIFO queues 301 a...301 n are read the Task Pointer detected will always be the highest priority one at any given time), it generates the CPU interrupt signal which is sent to the processor 101. At the same time, the FIFO Queue Read Control block 611 copies the priority value of the Task Pointer which caused the CPU interrupt to be sent, into a Latched Priority Register 617 in the enhanced interrupt controller.

The CPU interrupt signal notifies the processor 101 that it should read the Latched Priority Register 617 in the enhanced interrupt controller which the processor does and obtains the priority value of the Task Pointer which triggered the CPU interrupt. The processor's 101 reading of the Latched Priority Register 617 causes the FIFO Queue Read Control block 611 to copy the Task Pointer which caused the generation of the CPU interrupt signal into a Latched Task Pointer register 619 (the Latched Priority register 617 and the Latched Task Pointer register 619 are the additional registers described as being in the output section 209 in the description relating to Figure 2).

At the same time, the FIFO Queue Read Control block 611 instructs the priority value corresponding to the Task Pointer (i.e. the Task Pointer which was detected as the highest priority Task Pointer by the FIFO read control block 611 and which caused the generation of the CPU interrupt and the copying of its priority value into the Latched Priority register 617) to be copied into the Priority Mask Stack within the Priority Mask module 621 of the output section 209. The Priority Mask Stack stores a historical record of the priority values copied into the Priority Mask module 621 and is implemented in the form of a last-in-first-out (LIFO) memory structure. Thus the most recent priority level copied into the Priority Mask module 621 is stored at the top of the Priority Mask Stack. The priority mask module 621 "masks" the FIFO queues 301a...301n within the Message Queue module 207 so that only Task Pointers in FIFO queues 301 a...301n (the Task Pointers being detected by the comparison between the write and read pointers) having higher priories than the current priority mask level cause the FIFO Queue Read Control block 611 to generate a CPU interrupt signal.

Once the FIFO Queue Read Control block 611 has copied the Task Pointer into the Latched Task Pointer register 619 and caused the Priority Mask Stack to be updated with the priority value corresponding to the Task Pointer (which is the same priority value that the FIFO Queue Read control block 611 copied into the Latched Priority register 617 when it issued the CPU interrupt signal) the output section 209 is frozen. All of these steps occur as soon as the processor 101, in response to the CPU interrupt signal, reads the Latched Priority register 617. Once the output section 209 is frozen the processor 101 then reads the Latched Task Pointer register 619 to obtain the Task Pointer to be executed. Because it has just previously read the Latched Priority register 617, the processor is aware of the priority value of that Task Pointer. When the processor has read both of the Latched Priority register 617 and also the Latched Task Pointer register 619 the output section 209 of the enhanced interrupt controller is unfrozen and further, higher priority Task Pointers (i.e. those having a priority higher than the current priority mask level) can be detected by the FIFO Queue Read Control block 611.

Once the processor 101 has fully completed processing the task associated with the Task Pointer which it read from the Latched Task Pointer register 619, it writes the priority value of that Task Pointer (which it previously read from the Latched Priority register 617 prior to reading the Latched Task Pointer register 619) back to the Priority Mask module 621. This action causes the Priority Mask module 621 to remove that priority value from the top of the Priority Mask Stack thus lowering the "mask" of which FIFO queues 301a...301n can cause the FIFO Queue Read Control block 611 to generate a CPU interrupt for the highest priority Task Pointer detected at the output thereof. The next most recently stored priority value in the Priority Mask Stack (i.e. the value which is now at the top) is uncovered and sets the priority mask level.

The procedure discussed above results in the processor 101 processing Task Pointers in order of their priority level (most important first) and also, within a given priority level, the Task Pointers are processed in chronological order of their input into the FI FO queues 301a...301n.

As discussed in relation to the simple overview described in Figures 2 and 3, if a Task Pointer is currently being executed by the processor but a more important (i.e. higher priority level) Task Pointer then arrives at the output of the FIFO queues 301 a...301 n, that higher priority Task Pointer interrupts the processing of the Task Pointer originally being processed.

However, if a Task Pointer (i.e. an Event) reaches the output of a FIFO queue 301a...301n of higher priority than a Task Pointer which was until that point considered to be the highest priority Task Pointer whether or not the higher priority Task Pointer is dealt with immediately by the enhanced interrupt controller is determined by whether the processor 101 has yet read the Latched Priority Register 617 and obtained the priority value of the previous highest priority Task Pointer (which it would do in response to the CPU interrupt signal which the FIFO Queue Read Control block 611 will have generated in response to detecting the previously highest priority event).

If the FIFO Queue Read Control block 611 detects the new higher priority Task Pointer any time before the processor 101 reads the Latched Priority register 617 (which the FIFO Queue Read Control block 611 will have loaded with the priority value of the previously highest Task Pointer when it issued the CPU interrupt signal) then the FIFO Queue Read Control block 611 simply updates the Latched Priority register 617 with the priority value corresponding to the new higher priority Task Pointer. When the processor 101 then reads the Latched Priority register 617 (because the CPU interrupt signal is still being asserted by the FIFO Queue Read Control block) the FIFO Queue Read Control block 611 then updates the Latched Task Pointer register 619 with the Task Pointer of the new higher priority Task Pointer detected in the Message Queue module 207 and updates the priority mask stack with the priority value of the new higher priority Task Pointer. As before, the output section 209 of the enhanced interrupt controller is then frozen until the processor 101 has also read the Latched Task Pointer register 619.

However, if the higher priority Task Pointer is detected as, or after, the processor 101 has read the Latched Priority register 617 (and has thus obtained the priority value of the Task Pointer which was, until detection of the new higher priority Task Pointer, considered to be the highest priority Task Pointer) then the FIFO Queue Read Control block does not update the Latched Priority register 617 with the new, higher priority value. Thus, as would normally be the case, in response to the processor reading the Latched Priority register 617, the FIFO Queue Read Control block copies the Task Pointer of the previously highest Task Pointer (i.e. the Task Pointer whose associated priority value was read by the processor from the Latched Priority register 617) into the Latched Task Pointer register 619. Similarly, the FIFO Queue Read Control block 611 only causes the priority mask stack to be updated with the priority value corresponding to the priority value read by the processor from the Latched Priority register 619. The output section 209 of the enhanced interrupt controller is then frozen until the processor 101 has also read the Task Pointer stored in the Latched Task Pointer register 619.

The new, higher, priority Task Pointer detected will be processed through the output section 209 of the enhanced interrupt controller as soon as the output section is unfrozen and the FIFO Queue Read Control block 611 copies its priority value into the Latched Priority register 617 and generates another CPU interrupt signal instructing the processor 101 to read that register. When the higher priority Task Pointer is eventually processed through the output section 209 of the enhanced interrupt controller it will cause the processor to interrupt its processing of the task associated with the Task Pointer of the previously highest priority Task Pointer and begin on the task associated with the new, higher, priority Task Pointer.

The operation of the output section 209 in the manner just described ensures that the processor 101 always reads the Task Pointer from the Latched Task Pointer register 619 which corresponds to the priority value in the Latched Priority register 617.

For a given Task Pointer detected in the FIFO Queues 301a...301n which causes a CPU Interrupt signal to be generated by the FIFO Queue Read Control block 611, the processor 101 must access both the Latched Priority register 617 and the Latched Task Pointer register 619 before the CPU interrupt signal will be de-asserted.

In addition, the read-pointer associated with the currently active FIFO queue 301a...301n Task Pointer entry (i.e. the Task Pointer which caused the CPU interrupt to be issued) is only incremented at the point that the processor 101 writes the corresponding priority value of the Task Pointer whose task it has just completed back to the Priority Mask module 621 upon completion of the task associated with the Task Pointer (i.e. the active Task Pointer remains in the FIFO queue 301a...301n until its task has been fully completed). Although the Task Pointer for an event which is currently being processed remains in the FIFO queue 301 a...301 n until completion of its task, it will not cause further CPU Interrupt signals to be asserted by the FIFO Queue Read Control block 611 since the FIFO Queue Read Control block 611 will have instructed the Priority Mask to have been set at the same level as the active entry (i.e. it will be masked), when that particular Task Pointer first causes the FIFO Queue Read Control block 611 to first assert a CPU interrupt signal.

As discussed above, the FIFO Queue Read Control block 611 outputs a CPU Interrupt signal to inform the processor 101 that it must read the Latched Priority register 617. As also discussed, the CPU Interrupt signal is output whenever the FIFO Queue Read Control block 611 detects that there are unread Task Pointers in the FI FO Queues 301a...301n of higher priority than the current Priority Mask level and the CPU Interrupt Enable module 613 is not masking CPU interrupt signals. If the processor 101 requires an "edge" in order to detect the CPU interrupt signal, then this is emulated by disabling and re-enabling the CPU Interrupt Enable module 613 at an appropriate point in the processor cycle.

As well as the hardware interrupts and software requests which are input into the enhanced interrupt controller 109 according to the present invention, a number of "exception" signals can be generated by the enhanced interrupt controller 109 for routing to the processor 101. These will be described in further detail below.

Firstly there are "soft" exception signals which do not relate to "error" conditions of the enhanced interrupt controller 109 but provide a warning relating to a condition of the enhanced interrupt controller. For example, a "high-water mark" type soft exception signal can be generated by either the FIFO queues 303a...303n in the Software Request Receiving Section 203 or by the FIFO queues 301a...301n in the Message Queue module 207. These "high-water mark", soft, exceptions are signals indicating that the respective FIFO queues have been filled to a predetermined proportion of their total capacity. In effect, these "high-water mark" type soft exceptions provide a warning that the storage capacities within the various FIFO queues in the enhanced interrupt controller are in danger of being reached.

Soft exception signals, such as those described above, are sent from whichever component of the enhanced interrupt controller generated them to the Hardware

Interrupt Detection module 601. Task Pointers and associated priority values for each type of soft exception signal that might be generated by the enhanced interrupt controller 109 are stored in the Pre-Programmed Hardware Task Pointer Store 605 and the Programmable Hardware Priority module 603, respectively. The priority decoder 205 treats the soft exceptions received at the Hardware Interrupt Detection module 601 in exactly the same way as hardware interrupts - it looks up the task pointer and priority value associated with them and loads them into the Message Queue module 207 in the appropriate way.

When a soft exception signal is received at the Hardware Interrupt Detection module 601, a bit corresponding to that type of soft exception is set in an Exception Status Register 623 within the enhanced interrupt controller which indicates that an exception of that type has occurred. At the same time, a bit corresponding to that type of soft exception is set in an Exception Control module 625 within the enhanced interrupt controller. The Exception Control module 625 performs the same "masking" function for soft exceptions received at the Hardware Interrupt Detection module 601 as the Hardware Interrupt Mask 607 does for normal hardware generated interrupt signals received there. The soft exceptions are processed through the enhanced interrupt controller in the manner of a normal Task Pointer. When, exactly, a Task Pointer relating to a soft exception will actually cause a CPU interrupt signal to be generated by the FIFO Queue Read Control block 611 and subsequently be read from the Latched Task Pointer register 619 depends on the priority value of the soft exception. The higher priority the soft exception is the quicker it will be communicated to the processor 101.

Hard exception signals relate to error conditions that have occurred within the enhanced interrupt controller 109 and indicate that an error is occurring. For example, hard exception signals can be generated to indicate that the FIFO queues 303a...303n in the Software Request Receiving Section 203 are overflowing, that the FIFO queues 301a...301n in the Message Queue module 207 are overflowing, or that the processor 101 has attempted to read the Latched Priority module 617 when it has not been instructed to by a CPU Interrupt signal from the FIFO Queue Read Control block 611. As with the soft exception signals, a bit corresponding to each type of hard exception signal is set in each of the Exception Status Register 623 and the Exception Control module 625.

In contrast to the soft exceptions which may be generated by the enhanced interrupt controller 109, however, hard exception signals are communicated to the processor 101 in a different manner. A hard exception monitoring block 627 within the enhanced interrupt controller 109 monitors the components of the controller for a hard exception signal. If it detects a hard exception signal being generated, it instructs the FIFO Queue Read Control block 611 to generate a CPU interrupt signal to be sent to the processor but it also immediately updates the Latched Priority register 617 with the value of -1 (which is the priority level given to all hard exception signals thus making them the signal with the highest priority in the enhanced interrupt controller).

When the processor 101 reads the Latched Priority register 617 in response to receiving the CPU interrupt signal, the hard exception monitoring block will update the Latched Task Pointer register 619 with the Task Pointer corresponding to the hard exception signal so that the processor 101 reads that Task Pointer and executes the task associated with that Task Pointer in place of any other operation it may have been performing. When the Latched Task Pointer 619 is updated with the Task Pointer of the hard exception, the priority mask stack is also updated with the priority value of the hard exception Task Pointer (i.e. -1). This ensures that no further Task Pointers will be processed until the Task Pointer related to the hard exception has been fully processed by the processor 101 (because the priority mask stack level is not lowered until such time as the processor 101 writes back the priority value of -1 once it has finished completing the task associated with the Task Pointer of the hard exception). Thus the skilled person will appreciate that the hard exceptions override any other tasks that the enhanced interrupt controller may be scheduling or which the processor may be already processing.

The skilled person will appreciate that the modules and blocks of the enhanced interrupt controller described in detail above could be implemented using appropriate hardware such as programmable IC's (PICS), Field Programmable Gate Arrays, or Application Specific Integrated Circuits (ASICs). Alternatively, the functionality of the enhanced interrupt controller could be provided by implementing the modules and blocks described herein in appropriate software compiled and implemented on a suitable computer platform.

### Modifications

The skilled person will appreciate that, although the embodiment of the enhanced interrupt controller described above has seven priority levels defined in the system (ranging from priority level 0 at the highest priority to priority level 6 at the lowest level of priority) together with a corresponding number of FIFO queues 301 a...301 n, 303a...303n in both the Software Request Receiving Section 203 and the Message Queue module 207, the enhanced interrupt controller of the present invention is scalable so that it could work with any number of priority levels. All that is required is that the number of FIFO queues 301 a...301 n, 303a...303n in both the Software Request Receiving Section 203 and the Message Queue module 207 match the number of priority levels.

The skilled person will understand that the Hardware Interrupt Detection module 601 can receive any number of hardware generated interrupt signals and the priority decoder 205 could still load Task Pointers corresponding to those signals into the Message Queue module 207 provided that the Programmable Hardware Priority module 603 and the Pre-Programmed Hardware Task Pointer store module 605 holds appropriate data regarding the priority level and the Task Pointer associated with each of those hardware generated interrupt signals.

The skilled person will appreciate that although only two types of soft exception interrupt signal and two types of hard exception interrupt signals have been described above, the number of hard and soft interrupt signals that the enhanced interrupt controller is able to process is completely scalable provided that the modules which are involved in processing and routing those exception interrupts through the enhanced interrupt controller are also scaled to accommodate the increase or decrease in the number of exception interrupt signals. Any number could be envisaged provided that the priority values and Task Pointers associated with each one are known or available to the enhanced interrupt controller. Moreover, a hard or soft exception can relate to any occurrence or potential problem within the enhanced interrupt controller since they are defined by Task Pointers and the Task Pointers hold data appropriate to the interrupt events/signals to which they relate.

The FIFO queues 303a...303n in the Software Request Receiving Section 203 are described as being individual FIFO queues for each level of priority defined in the system. The skilled person will understand however, that alternatively, a single FIFO queue could be formed with a memory-mapped CPU interface (addressable in the same manner as the FIFO Queues 301a...301n in the Message Queue module 207). The single FIFO would be accessible via multiple register addresses where each address within the single FIFO is mapped to one of the priority levels defined within the system. In such a case, rather than the priority decoder 205 determining the priority level of a Task Pointer read from the Software Request Receiving Section 203 by referring to priority of the FIFO queue from which it was read, the priority decoder 205 would ascertain the priority level of the Task Pointer it is reading from the Software Request Receiving Section 203 by deriving it from the register address within the single FIFO that the Task Pointer was written to by the processor 101. Clearly if only a single FIFO queue is implemented in the Software Request Receiving Section 203 in this way, the priority decoder 205 will not need to chose the Task Pointer which is in the highest priority FIFO queues 303a...303n therein as is the case in the main embodiment described above but would simply read whatever Task Pointer is at the output end of the single FIFO queue.

In a simpler implementation of the Priority Mask Stack described above, the stack could comprise a register having a data bit for each level of priority defined in the system. A bit from this register is set when a Task Pointer of a certain priority is read from the Message Queue module 207 and cleared when the processor 101 writes back this priority value. The next priority mask level is then simply determined by finding the next highest priority bit set in the Priority Mask Stack. Thus in this arrangement, the Priority Mask Stack is not implemented as a LIFO memory structure.

In the main embodiment described, the enhanced interrupt controller has been described in relation to a single processor system. It receives software requests (in the form of Task Pointers of appropriate priority) from a single processor 101 and also outputs its CPU interrupt signal to the single processor. However, the skilled person will appreciate that due to the addressable nature of the Software Request Receiving Section 203 and the Latched Priority register 617 and Latched Task Pointer register 619, any processor in a multi-processor system could send Task Pointers to a particular enhanced interrupt controller by specifying the appropriate address for the Software Request Receiving Section. Furthermore, the enhanced interrupt controller could be adapted to address the CPU interrupt signal which it generates to any one of a number of processors in a multi-processor system. Whichever processor then received the CPU interrupt signal would then read the Latched Priority register 617 and Latched Task Pointer register 619 within the enhanced interrupt controller which generated the CPU interrupt signal. Thus a system is envisaged incorporating one or more enhanced interrupt controllers in communication, at their inputs and outputs, to one or more processors. Such a system, with appropriate addressing to route inputs and outputs to various ones of the processors and enhanced interrupt controllers would allow Task Pointers to be communicated around the system in any combination of paths.

The Task Pointer of the present invention has been described as comprising both a Task ID and Task Data. The skilled person will understand that the meta data held in the Task Data could take any form appropriate to the processor being used in the system as long as the processor is able to use that meta data to determine not only which task to execute but also with what entity (for example a software entity or hardware entity).

In one embodiment, the task data/meta data could actually be the direct data upon which the processor is required to operate. If this were to be the case then the data storage areas throughout the enhanced interrupt controller which store the Task Pointers at various stages of their progress through the enhanced interrupt controller would need to be sized appropriately to hold the data. In this embodiment, providing the processor with the direct data upon which it is to operate in the Task Data field of the Task Pointer could improve the efficiency of task execution.

In a further modification, the Task Data could be a pointer to data to be processed by the processor using the task routine and/or it could include temporal information such as the time at which the Task Pointer (or the interrupt or software request which it corresponds to) was generated. In one embodiment, the temporal information could also additionally include a start and end time pertaining to the task which the processor is to carry out in response to the Task Pointer so that it would start and stop such a task at the times defined in the Task Data or begin said task after a delay specified in the Task Data. Also, the temporal information in the Task Data field of each Task Pointer could also be used by the enhanced interrupt controller itself to assist in routing the Task Pointers around the components of the enhanced interrupt controller.

The skilled person will appreciate that instead of the Hardware Interrupt Mask module 607 described in the embodiment above, either the priority decoder 205 or the Hardware Detection module 601 could contain a memory buffer to store hardware interrupt signals input into the enhanced interrupt controller. Using such a buffer would mean that multiple interrupt signals generated by a particular hardware peripheral could all be queued in the enhanced interrupt controller in the chronological order in which they were received and be converted into Task Pointers appropriately. Since the hardware interrupt signals could be stored until such time as they could be converted into Task Pointers and loaded into the Message Queue module 207, there would be no need to use a mask to mask multiple hardware interrupt signals from a single peripheral device until a Task Pointer for the first signal has been input to the Message Queue module 207.

The embodiment described above has the processor reading the Latched Priority register 617 in response to receiving the CPU interrupt signal output by the FIFO Queue Read Control block 611. When the processor 101 reads the Latched Priority register 617, the FIFO Queue Read Control block 611 updates the Latched Task Pointer register 619 and the priority mask stack as described above and then the processor 101 reads the Task Pointer stored in the Latched Task Pointer register 619. In a modification of this method, in response to receiving the CPU interrupt signal, the processor could read the Task Pointer (of the event which caused the CPU interrupt signal to be asserted) and its associated priority directly from whichever of the FIFO Queues 301a...301n it resides in. If a higher priority Task Pointer was detected at the output of the FIFO Queues 301a...301n after the CPU interrupt had been asserted but before the processor 101 had read the Task Pointer (which caused the generation of the CPU interrupt signal) and associated priority value, the processor 101 would then read the higher priority Task Pointer and its associated priority value.

The skilled person would understand that the Programmable Hardware Priority module 603, and the Pre-Programmed Hardware Task Pointer Store 605 could be altered by the processor 101 at any time after the initial initialisation of the system in order to provide more flexible and adaptive assignment of hardware interrupt to task priority and task pointer mappings - i.e. the processor could alter what Task Pointer and associated priority value were associated with each type of hardware interrupt signal within the Pre-Programmed Hardware Task Pointer Store 605 and Programmable Hardware Priority module 603, respectively. Also, the skilled person will understand that, since the processor 101 writes software requests to the Software Request Receiving Section 203 in the form of Task Pointers having associated priorities, the processor 101 could alter the Task Pointer and associated priority for any given software request as necessary.

## Claims

1. An interrupt controller (109) for routing interrupt signals to a processor (101), said controller comprising:
at least one interface (111) for receiving hardware-generated interrupt signals and software-generated request signals;
means (205) for determining a priority associated with each said received signal;
a storage unit (207) for storing data associated with each received signal, a storing order being based on the priority determined for each signal, and for signals of the same priority, on the chronological order of receipt of said signals;
wherein said interrupt controller (109) is operable to instruct said processor (101) to read stored data from the interrupt controller in the stored order, wherein stored data having a higher priority is read in preference to stored data having a lower priority.

2. The interrupt controller of claim 1, wherein said data associated with each received signal comprises a task pointer having both a Task ID and also a Task Data field.

3. The interrupt controller of claim 2, comprising one or more further storage units (603, 605) for storing data associated with each and every type of hardware-generated interrupt signal that could be received by said interrupt controller (109), wherein said interrupt controller is operable to obtain the data associated with a particular received hardware-generated interrupt signal from the one or more further storage units (603, 605).

4. The interrupt controller of claim 3, comprising two of said one or more further storage units, wherein
the first of said two storage units (605) is arranged to store Task Pointers associated with each and every type of hardware-generated interrupt signal that could be received by said interrupt controller, and
the second of said two storage units (603) is arranged to store the priority level associated with each and every type of hardware-generated interrupt signal that could be received by said interrupt controller,
wherein said interrupt controller (109) is operable to obtain the priority associated with a particular received hardware-generated interrupt signal from the second further storage unit (603) and the Task Pointer associated with that particular received hardware-generated interrupt signal from the first further storage unit (605).

5. The interrupt controller of any of claims 2 to 4, further comprising means (205) for reading the data associated with each received software-generated interrupt signal from said software-generated request signal.

6. The interrupt controller of claim 5, wherein said means (205) for reading the data associated with each received software-generated request signal comprises means for reading a task pointer and inferring a priority value associated with the task pointer.

7. The interrupt controller of any one of claims 2 to 6, wherein said task id comprises data identifying a task routine to be carried out by the processor.

8. The interrupt controller of any one of claims 2 to 7, wherein said task data field comprises data comprising at least one of: information instructing the processor as to which task to execute; information instructing the processor as to what hardware or software component or application to use to execute said task routine; data to be directly processed by the processor using the task routine; a pointer to data to be processed by the processor using the task routine; and/or temporal information.

9. The interrupt controller of any one of claims 1 to 8, wherein said storage unit (207) for storing the data associated with each received signal after the priority of said signal has been determined comprises a first-in-first-out memory structure for each priority of signal that can be received by the interrupt controller.

10. The interrupt controller of any one of claims 1 to 8, wherein said storage unit (207) for storing the data associated with each received signal after the priority of said signal has been determined comprises a single first-in-first-out memory structure sub-divided into a plurality of individually addressable registers, where there is a register for each priority of signal that can be received by the interrupt controller.

11. The interrupt controller (109) of any preceding claim, further comprising:
a read control block (611);
a latched priority register (617); and
a latched task pointer register (619);
wherein, at any given instance, said read control block (611) is operable to place a priority value corresponding to a priority of a stored Task Pointer into said latched priority register (617), and issue a signal to said processor (101) to cause it to read the latched priority register (617); and
in response to the processor (101) reading the latched priority register (617), copy the Task Pointer into the latched task pointer register (619) to be read by the processor (101).

12. A method of routing interrupt signals to a processor using an interrupt controller, said method comprising:
receiving hardware-generated interrupt signals and software-generated request signals;
determining a priority associated with each said received signal;
storing data associated with each received signal in a storage unit, a storing order being based on the priority determined for each signal, and for signals of the same priority, on the chronological order of receipt of said signals; and
instructing said processor to read stored data from the interrupt controller in the stored order wherein stored data having a higher priority is read in preference to stored data having a lower priority.

13. The method of claim 12, further comprising storing a task pointer having both a Task ID and also a Task Data field in the storage unit, wherein said Task ID comprises data identifying a task routine to be carried out by the processor and said Task Data field data comprises at least one of: information instructing the processor as to which task to execute; information instructing the processor as to what hardware or software component or application to use to execute said task routine; data to be directly processed by the processor using the task routine; a pointer to data to be processed by the processor using the task routine; and/or temporal information.

14. The method of claim 13, further comprising:
storing in said interrupt controller task pointers corresponding to each and every hardware-generated interrupt signal that could be received by said interrupt controller, said method further comprising, when a hardware-generated interrupt signal is received at the interrupt controller, retrieving the data associated with the particular received hardware-generated interrupt signal from storage.

15. The method of any of claims 12 to 14, further comprising:
at any given instance, using a read control block to:
place a priority value corresponding to a priority of a highest priority Task Pointer into a latched priority register and instruct said processor to read said latched priority register; and
in response to said processor reading said latched register, copy the Task Pointer into a latched task pointer register to be read by the processor.

## Patentansprüche

1. Interruptsteuerung (109) zum Leiten von Interruptsignalen an einen Prozessor (101), wobei die Steuerung Folgendes aufweist:
mindestens eine Schnittstelle (111) zum Empfangen von Interruptsignalen, die von Hardware erzeugt sind, und von Interruptsignalen, die von Software erzeugt sind,
Mittel (205) zum Bestimmen einer Priorität, die mitjedem empfangenen Signal verknüpft ist,
eine Speichereinheit (207) zum Speichern von Daten, die mitjedem empfangenen Signal verknüpft sind, wobei eine Speicherreihenfolge auf einer Priorität, die für jedes Signal bestimmt ist, und für Signale gleicher Priorität auf der chronologischen Reihenfolge des Empfangs der Signale basiert,
wobei die Interruptsteuerung (109) dazu betriebsfähig ist, den Prozessor (101) anzuweisen, gespeicherte Daten von der Interruptsteuerung in der gespeicherten Reihenfolge zu lesen, wobei gespeicherte Daten mit einer höheren Priorität gegenüber gespeicherten Daten mit geringerer Priorität bevorzugt gelesen werden.

2. Interruptsteuerung nach Anspruch 1, wobei die Daten, die mitjedem empfangenen Signal verknüpft sind, einen Prozesszeiger aufweisen, der sowohl eine Prozessidentität als auch ein Prozessdatenfeld aufweist.

3. Interruptsteuerung nach Anspruch 2, mit einer oder mehreren weiteren Speichereinheiten (603, 605) zum Speichern von Daten, die mit jeder einzelnen Art von von Hardware erzeugtem Interruptsignal verknüpft sind, das von der Interruptsteuerung (109) empfangen werden könnte, wobei die Interruptsteuerung dazu betriebsfähig ist, die Daten, die mit einem speziellen empfangenen von Hardware erzeugten Interruptsignal verknüpft sind, aus der einen oder den mehreren weiteren Speichereinheiten (603, 605) zu erhalten.

4. Interruptsteuerung nach Anspruch 3, mit zwei von der einen oder den mehreren weiteren Speichereinheiten, wobei
die erste der beiden Speichereinheiten (605) dazu ausgelegt ist, Prozesszeiger zu speichern, die mit jeder einzelnen Art von von Hardware erzeugtem Interruptsignal verknüpft sind, das von der Interruptsteuerung empfangen werden könnte, und
die zweite der beiden Speichereinheiten (603) dazu ausgelegt ist, die Prioritätsstufe zu speichern, die mit jeder einzelnen Art von von Hardware erzeugtem Interruptsignal verknüpft ist, das von der Interruptsteuerung empfangen werden könnte,
wobei die Interruptsteuerung (109) dazu betriebsfähig ist, die Priorität, die mit einem speziellen empfangenen von Hardware erzeugten Interruptsignal verknüpft ist, von der zweiten weiteren Speichereinheit (603) und den Prozesszeiger, der mit jenem speziellen empfangenen von Hardware erzeugten Interruptsignal verknüpft ist, von der ersten weiteren Speichereinheit (605) zu erhalten.

5. Interruptsteuerung nach einem der Ansprüche 2 bis 4, ferner mit Mitteln (205) zum Lesen von Daten, die mit jedem empfangenen von Software erzeugten Interruptsignal verknüpft sind, aus dem von Software erzeugten Anfragesignal.

6. Interruptsteuerung nach Anspruch 5, wobei die Mittel (205) zum Lesen der Daten, die mitjedem empfangenen von Software erzeugten Anfragesignal verknüpft sind, Mittel zum Lesen eines Prozesszeigers und zum Ableiten eines Prioritätswertes aufweisen, der mit dem Prozesszeiger verknüpft ist.

7. Interruptsteuerung nach einem der Ansprüche 2 bis 6, wobei die Prozessidentität Daten aufweist, die eine Prozessroutine identifizieren, die von dem Prozessor ausgeführt werden soll.

8. Interruptsteuerung nach einem der Ansprüche 2 bis 7, wobei das Prozessdatenfeld Daten aufweist, die mindestens eines aus Folgendem aufweisen: Information, die den Prozessor darüber unterrichtet, welcher Prozess auszuführen ist, Information, die den Prozessor darüber unterrichtet, welche Hardware- oder Softwarekomponente oder -anwendung zu benutzen ist, um die Prozessroutine auszuführen, Daten, die unmittelbar von dem Prozessor unter Verwendung der Prozessroutine verarbeitet werden sollen, einen Zeiger auf Daten, die von dem Prozessor unter Verwendung der Prozessroutine verarbeitet werden sollen, und/oder Zeitinformation.

9. Interruptsteuerung nach einem der Ansprüche 1 bis 8, wobei die Speichereinheit (207) zum Speichern der Daten, die mitjedem empfangenen Signal verknüpft sind, nachdem die Priorität des Signals bestimmt worden ist, eine FIFO-Speicherstruktur für jede Priorität eines Signals aufweist, das von der Interruptsteuerung empfangen werden kann.

10. Interruptsteuerung nach einem der Ansprüche 1 bis 8, wobei die Speichereinheit (207) zum Speichern der Daten, die mitjedem empfangenen Signal verknüpft sind, nachdem die Priorität des Signals bestimmt worden ist, eine einzige FIFO-Speicherstruktur aufweist, die in eine Vielzahl von individueller adressierbarer Register unterteilt ist, wobei für jede Priorität eines Signals, das von der Interruptsteuerung empfangen werden kann, es ein Register gibt.

11. Interruptsteuerung (109) nach einem der vorhergehenden Ansprüche, ferner mit:
einem Lesesteuerblock (611),
einem Einrastprioritätsregister (617) und
einem Einrastprozesszeigerregister (619),
wobei zu einem beliebigen vorgegebenen Zeitpunkt der Lesesteuerblock (611) dazu betriebsfähig ist, einen Prioritätswert, der einer Priorität eines gespeicherten Prozesszeigers entspricht, in das Einrastprioritätsregister (617) zu plazieren, und ein Signal an den Prozessor (101) auszugeben, um ihn zu veranlassen, das Einrastprioritätsregister (617) auszulesen, und
als Reaktion darauf, dass der Prozessor (101) das Einrastprioritätsregister (617) liest, den Prozesszeiger in das Einrastprozesszeigerregister (619) zu kopieren, das von dem Prozessor (101) gelesen werden soll.

12. Verfahren zum Leiten von Interruptsignalen an einen Prozessor unter Verwendung einer Interruptsteuerung, wobei das Verfahren Folgendes aufweist:
Empfangen von Interruptsignalen, die von Hardware erzeugt sind, und von Interruptsignalen, die von Software erzeugt sind,
Bestimmen einer Priorität, die mitjedem empfangen Signal verknüpft ist,
Speichern von Daten, die mitjedem empfangenen Signal verknüpft sind, in einer Speichereinheit, wobei eine Speicherreihenfolge auf der Priorität, die für jedes Signal bestimmt ist, und für Signale gleicher Priorität auf der chronologischen Reihenfolge eines Empfanges der Signale basiert, und
Anweisen des Prozessors, gespeicherte Daten aus der Interruptsteuerung in der gespeicherten Reihenfolge zu lesen, wobei gespeicherte Daten mit einer höheren Priorität gegenüber gespeicherten Daten mit geringerer Priorität bevorzugt gelesen werden.

13. Verfahren nach Anspruch 12, ferner mit Speichern eines Prozesszeigers mit sowohl einer Prozessidentität als auch einem Prozessdatenfeld in der Speichereinheit, wobei die Prozessidentität Daten aufweist, die eine Prozessroutine identifiziert, die von dem Prozessor ausgeführt werden soll, und das Prozessdatenfeld mindestens eines aus Folgendem aufweist: Information, die den Prozessor darüber unterrichtet, welcher Prozess auszuführen ist, Information, die den Prozessor darüber unterrichtet, was für eine Hardware- oder Softwarekomponente oder -anwendung zu benutzen ist, um die Prozessroutine auszuführen, Daten, die unmittelbar von dem Prozessor unter Verwendung der Prozessroutine verarbeitet werden sollen, einem Zeiger auf Daten, die von dem Prozessor unter Verwendung der Prozessroutine verarbeitet werden sollen, und/oder Zeitinformation.

14. Verfahren nach Anspruch 13, ferner mit:
Speichern von Prozesszeigern in der Interruptsteuerung, die jedem einzelnen von Hardware erzeugten Interruptsignal entsprechen, das von der Interruptsteuerung empfangen werden könnte, wobei das Verfahren, wenn ein von Hardware erzeugtes Interruptsignal an der Interruptsteuerung empfangen wird, ferner ein Abrufen der Daten, die mit dem speziellen empfangenen von Hardware erzeugten Signal verknüpft sind, aus dem Speicher aufweist.

15. Verfahren nach einem der Ansprüche 12 bis 14, ferner mit:
Verwenden eines Lesesteuerblocks zu einem beliebigen vorgegebenen Zeitpunkt, um:
einen Prioritätswert, der einer Priorität eines Prozesszeigers von höchster Priorität entspricht, in ein Einrastprioritätsregister zu plazieren und den Prozessor anzuweisen, das Einrastprioritätsregister zu lesen, und
als Reaktion darauf, dass der Prozessor das Einrastregister liest, den Prozesszeiger in ein Einrastprozesszeigerregister kopiert, das von dem Prozessor gelesen werden soll.

## Revendications

1. Contrôleur d'interruption (109), destiné à router des signaux d'interruption vers un processeur (101), ledit contrôleur comprenant :
au moins une interface (111), destinée à recevoir des signaux d'interruption produits par le matériel et des signaux de demande produits par le logiciel ;
un moyen (205), destiné à déterminer une priorité associée à chacun desdits signaux reçus ;
une unité d'enregistrement (207), destinée à enregistrer des données associées à chaque signal reçu, un ordre d'enregistrement étant fondé sur la priorité déterminée pour chaque signal et, pour des signaux ayant la même priorité, sur l'ordre chronologique de réception desdits signaux ;
dans lequel ledit contrôleur d'interruption (109) est en mesure d'ordonner audit processeur (101) de lire des données enregistrées dans le contrôleur d'interruption, dans l'ordre d'enregistrement, des données enregistrées ayant une priorité supérieure étant lues de préférence à des données enregistrées ayant une priorité inférieure.

2. Contrôleur d'interruption selon la revendication 1, dans lequel lesdites données associées à chaque signal reçu comprennent un pointeur de tâche qui comporte à la fois un identificateur de tâche et une zone de données de la tâche.

3. Contrôleur d'interruption selon la revendication 2, comprenant une ou plusieurs autres unités d'enregistrement (603, 605) destinées à enregistrer des données associées à chacun des types de signaux d'interruption produits par le matériel qui pourraient être reçus par ledit contrôleur d'interruption (109), ledit contrôleur d'interruption étant en mesure d'obtenir les données associées à un signal d'interruption particulier produit par le matériel auprès desdites une ou plusieurs autres unités d'enregistrement (603, 605).

4. Contrôleur d'interruption selon la revendication 3, comprenant deux desdites une ou plusieurs autres unités d'enregistrement, dans lequel :
la première desdites deux unités d'enregistrement (605) est conçue pour enregistrer des pointeurs de tâche associés à chacun des types de signaux d'interruption produits par le matériel qui pourraient être reçus par ledit contrôleur d'interruption ; et
la seconde desdites deux unités d'enregistrement (603) est conçue pour stocker le niveau de priorité associée à chacun des types de signaux d'interruption produits par le matériel qui pourraient être reçus par ledit contrôleur d'interruption ;
dans lequel ledit contrôleur d'interruption (109) est en mesure d'obtenir la priorité associée à un signal d'interruption particulier produit par le matériel auprès de la seconde autre unité d'enregistrement (603) et le pointeur de tâche associé à ce signal d'interruption particulier produit par le matériel auprès de la première autre unité d'enregistrement (605).

5. Contrôleur d'interruption selon l'une quelconque des revendications 2 à 4, comprenant en outre un moyen (205) destiné à lire les données associées à chacun des signaux d'interruption produits par le logiciel ainsi reçus dans le signal de demande produit par le logiciel.

6. Contrôleur d'interruption selon la revendication 5, dans lequel ledit moyen (205) destiné à lire les données associées à chacun des signaux d'interruption produits par le logiciel ainsi reçus comprend un moyen destiné à lire un pointeur de tâche et à déduire une valeur de priorité associée au pointeur de tâche.

7. Contrôleur d'interruption selon l'une quelconque des revendications 2 à 6, dans lequel ledit identificateur de tâche comprend des données qui identifient une routine de tâche à exécuter par le processeur.

8. Contrôleur d'interruption selon l'une quelconque des revendications 2 à 7, dans lequel ladite zone de données de tâche comprend des données qui incluent au moins l'une des suivantes : informations ordonnant au processeur la tâche à exécuter ; informations ordonnant au processeur l'application ou le composant matériel ou logiciel à utiliser pour exécuter ladite routine de tâche ; données à traiter directement par le processeur à l'aide de la routine de tâche ; pointeur vers des données à traiter par le processeur à l'aide de la routine de tâche ; et/ou informations temporaires.

9. Contrôleur d'interruption selon l'une quelconque des revendications 1 à 8, dans lequel ladite unité d'enregistrement (207), destinée à enregistrer les données associées à chaque signal reçu après que la priorité dudit signal a été déterminée, consiste en une structure de mémoire premier entré, premier sorti pour chaque priorité de signal pouvant être reçue par le contrôleur d'interruption.

10. Contrôleur d'interruption selon l'une quelconque des revendications 1 à 8, dans lequel ladite unité d'enregistrement (207), destinée à enregistrer les données associées à chaque signal reçu après que la priorité dudit signal a été déterminée, consiste en une unique structure de mémoire premier entré, premier sorti subdivisée en une pluralité de registres pouvant être adressés individuellement, un registre existant pour chaque priorité de signal pouvant être reçue par le contrôleur d'interruption.

11. Contrôleur d'interruption selon l'une quelconque des revendications précédentes, comprenant en outre :
un bloc de commande de lecture (611) ;
un registre de priorité avec échantillonnage-blocage (617) ; et
un registre de pointeur de tâche avec échantillonnage-blocage (619) ;
dans lequel, dans toute instance considérée, ledit bloc de commande de lecture (611) est en mesure de placer une valeur de priorité correspondant à une priorité d'un pointeur de tâche dans ledit registre de priorité avec échantillonnage-blocage (617) et d'émettre un signal vers ledit processeur (101) pour lui commander de lire le registre de priorité avec échantillonnage-blocage (617) ; et
après lecture par le processeur (101) du registre de priorité avec échantillonnage-blocage (617), de copier le pointeur de tâche dans le registre de pointeur de tâche avec échantillonnage-blocage (619) pour qu'il soit lu par le processeur (101).

12. Procédé de routage de signaux d'interruption vers un processeur à l'aide d'un contrôleur d'interruption, comprenant les étapes consistant à :
recevoir des signaux d'interruption produits par le matériel et des signaux de demande produits par le logiciel ;
déterminer une priorité associée à chacun desdits signaux reçus ;
enregistrer des données associées à chaque signal reçu dans une unité d'enregistrement, un ordre d'enregistrement étant fondé sur la priorité déterminée pour chaque signal et, pour des signaux ayant la même priorité, sur l'ordre chronologique de réception desdits signaux ; et
ordonner audit processeur de lire des données enregistrées dans le contrôleur d'interruption, dans l'ordre d'enregistrement, des données enregistrées ayant une priorité supérieure étant lues de préférence à des données enregistrées ayant une priorité inférieure.

13. Procédé selon la revendication 12, comprenant en outre les étapes consistant à enregistrer un pointeur de tâche qui comporte à la fois un identificateur de tâche et une zone de données de la tâche, ledit identificateur de tâche comprenant des données qui identifient une routine de tâche à exécuter par le processeur et lesdites données de la zone de données de tâche comprenant au moins l'une des suivantes : informations ordonnant au processeur la tâche à exécuter ; informations ordonnant au processeur l'application ou le composant matériel ou logiciel à utiliser pour exécuter ladite routine de tâche ; données à traiter directement par le processeur à l'aide de la routine de tâche ; pointeur vers des données à traiter par le processeur à l'aide de la routine de tâche ; et/ou informations temporaires.

14. Procédé selon la revendication 13, comprenant en outre l'étape consistant à :
enregistrer dans ledit contrôleur d'interruption des pointeurs de tâche correspondant à chacun des signaux d'interruption produits par le matériel qui pourraient être reçus par ledit contrôleur d'interruption, ledit procédé comprenant en outre, lorsqu'un signal d'interruption produit par le matériel est reçu par le contrôleur d'interruption, l'étape consistant à lire dans la mémoire les données associées au signal d'interruption produit par le matériel qui a été reçu en particulier.

15. Procédé selon l'une quelconque des revendications 12 à 14, comprenant en outre l'étape consistant à :
dans toute instance considérée, utiliser un bloc de commande de lecture pour :
placer une valeur de priorité correspondant à une priorité d'un pointeur de tâche dans un registre de priorité avec échantillonnage-blocage et ordonner audit processeur de lire le registre de priorité avec échantillonnage-blocage ; et
après que ledit processeur a lu ledit registre avec échantillonnage-blocage, copier le pointeur de tâche dans un registre de pointeur de tâche avec échantillonnage-blocage pour qu'il soit lu par le processeur.
